# EUROPEAN PATENT APPLICATION

(11) **EP 4 656 362 A1**
(43) Date of publication of application: **03.12.2025**
(21) Application number: 24382576.7
(22) Date of filing: 30.05.2024
(51) Int. Cl.: B29C 70/52, G06F 30/23, B29C 70/08, B29C 65/48

(54) **THERMOPLASTIC HYBRID PROFILE REINFORCED WITH FIBERGLASS AND CARBON FIBER**

(71) Applicant: Soluciones Solurban S.L., 28703 San Sebastián de los Reyes, Madrid (ES)
(72) Inventor: López, Alberto, San Sebastián de los Reyes, Madrid (ES)
(74) Representative: Pons IP

(57) **Abstract**

The present invention relates to a glass fibre reinforced plastic (GFRP) profile having a uniform section formed by means of a thermoplastic material bonded with glass fibre by means of a pultrusion method and incorporating at least one carbon fibre reinforcement (6) that is located in a partial specific area of the GFRP profile, making the final hybrid profile section non-uniform. The invention also relates to the method of manufacturing the hybrid profile.

## Description

### OBJECT OF THE INVENTION

The present invention relates to a hybrid thermoplastic profile formed from a known profile, formed by means of a thermoplastic incorporating a glass fibre-based reinforcement (GFRP), and on which, after performing a study related to the application of breaking loads, the maximum working stresses have been obtained and, in view of the values obtained, a carbon fibre-based reinforcement is incorporated in critical areas. Therefore, the profile is not oversized either in weight or cost for the requirements that are needed.

The invention also relates to the method for generating the reinforced profiles.

### BACKGROUND OF THE INVENTION

In the prior art, thermoplastic profiles are already known, being formed from a known profile by means of a thermoplastic incorporating a glass fibre-based reinforcement (GFRP) and on which a carbon fibre-based reinforcement is incorporated.

Therefore, when using a specific profile for a particular need, a profile that at least meets the requirements for which the profile is going to be used is usually selected, since the maximum loads will be found only in one area of the profile, whether in a central area, at one of the ends or in the area of application of a load.

However, the profiles are selected in dependence of the maximum stress values that they are capable of supporting, regardless of the area, being of a uniform continuous section. Therefore, the profile is always very oversized with respect to needs.

This problem affects not only the cost of the selected profile, but also everything that involves using an oversized element, especially regarding the weight of the element related to logistics and handling up to the location of the profile. Moreover, there are problems related to the fact that a specific product incorporates a structure that could be much lighter.

Document CN116512642A relates to the technical field of forming glass fibre reinforced plastic, particularly a composite high-strength glass fibre reinforced plastic pultrusion profile and a preparation method thereof. The composite high-strength glass fibre reinforced plastic pultrusion profile is prepared from unsaturated polyester resin, epoxy resin, phenolic resin, glass fibre, carbon fibre, boron fibre, aramid fibre, silicon carbide fibre, an ultraviolet light absorber, a flame retardant and a release agent. Subsequently, it comprises preparing a base material and a reinforcing material, immersing the reinforcing material into the base material in a preset immersion manner, preparing filamentous mixed colloid by means of a second preparation method, and performing pultrusion by using a preset pultrusion mould and a preset pultrusion process. According to the invention, the mechanical strength of the composite glass fibre reinforced plastic is improved, the overall weight is reduced and the universality of the glass fibre reinforced plastic is improved by using a mode of compounding a plurality of fibres to reinforce the matrix material and considering the influence of the fibre posture on the mechanical strength of the glass fibre reinforced plastic in the preparation process.

### DESCRIPTION OF THE INVENTION

The present invention relates to a hybrid thermoplastic profile formed from a known profile, formed by means of a thermoplastic incorporating a glass fibre-based reinforcement (GFRP) on which, after performing a study related to the application of breaking loads, the maximum working stresses have been obtained to incorporate a carbon fibre-based reinforcement in critical areas.

A study on beams made of different materials indicates the differences between a glass fibre reinforced plastic (GFRP) profile and a carbon fibre reinforced GFRP.

GFRPs exhibit the problem that this material has very limited mechanical properties, since it gives rise to large deformations and, at the same time, since it is an elastic material, no significant plastic deformation occurs before it breaks.

Therefore, the introduction of carbon fibre reinforcement in a GFRP results in a light material with great tensile strength and a high elastic modulus value. This material improves the deformation behaviour of the GFRP by around 25-28%, the maximum stress by around 50% and the breaking point load by around 75%.

This means that glass fibre reinforced plastic (GFRP) profiles to which a carbon fibre-based reinforcement has additionally been incorporated can be used providing substantial improvements in terms of material performance.

Moreover, reinforced profiles of this type are perfectly valid and suitable in a large number of situations and applications where metal structures usually cause problems, such as high corrosion, high electrical load areas, in applications such as antenna structures or in installations where permeability to electromagnetic waves is necessary.

Therefore, the present invention is focused on a structural system that addresses the challenges related to the poor performance of both steel and concrete in aggressive environments.

To achieve improvements in material strength, the profile of the invention is made up of a GFRP matrix and carbon fibre reinforcement in an area where the profile will be subjected to greater stress, although preferably the reinforcement is also applied to the web of the profile or on two opposite faces.

GFRP is manufactured using a pultrusion process starting from a thermoplastic material and glass fibre that guarantees a uniform distribution of glass fibres in the profile, thus ensuring structural cohesion and the desired properties. Once the GFRP is obtained, the area where the carbon fibre is going to be bonded is mechanically and chemically prepared to achieve an intimate bond with the reinforcement and the carbon fibre is bonded to the GFRP. Bonding is typically performed with epoxy. In dependence of the base thermoplastic material forming the GFRP, an epoxy with specific conditions is selected.

The bonding between GFRP and carbon fibre exhibits unique challenges due to differences in mechanical and thermal properties. These include managing differences in modulus of elasticity and coefficients of thermal expansion.

First, there are differences in the modulus of elasticity. Carbon fibre has a much higher modulus of elasticity than GFRP. This difference can cause stress concentrations at the interfaces between both materials, which can lead to delaminations or fractures in the bonding area.

Secondly, there are different thermal expansions. The thermal expansion coefficients of carbon fibre and GFRP can be significantly different. Temperature variations can cause additional stresses at the interface due to this difference, which can result in cracking or detachment of the reinforcement.

Thirdly, there are cyclic loads and fatigue. Under repeated loads, the difference in elastic modulus between carbon fibre and GFRP can lead to differential performance at the interface, potentially resulting in fatigue failure of the adhesive or the materials themselves near the bond.

Fourthly, there is chemical compatibility and adhesion. Effective adhesion between carbon fibre reinforcement and GFRP depends on the chemical compatibility between the materials and the adhesive used. Improper selection of the adhesive can result in a weak bond susceptible to failure under mechanical or environmental loads.

Therefore, to achieve suitable adhesion between the plastic used in the GFRP and the carbon fibre, the compatibility of the materials in terms of the aforementioned properties is verified.

Furthermore, for the assembly of different profiles together to form a structure, adhered internal bushings are used to facilitate the construction of hyperstatic structures.

The advantages of the profile obtained are the following:
- Greater mechanical strength: the combination of GFRP and carbon fibre provides high tensile strength and a high elastic modulus.
- Durability: The corrosion resistance of GFRP and the properties of carbon fibre ensure greater durability in aggressive environments.
- Versatility in applications: It is suitable for various structural applications where corrosion resistance and improved mechanical properties are required.
- Broad field of application: Structural elements for civil construction in aggressive environments, for the marine industry, such as boats and marine platforms, and for infrastructures exposed to chemical agents, such as bridges, tanks and structures in industrial environments.

In this way, after having seen the advantages that the use of carbon fibre brings to GFRP, additional advantages of the object of the present invention are described below.

The hybrid structural profile of the invention offers an effective solution to overcome the mechanical limitations of GFRP through the strategic incorporation of carbon fibre. This provides a profile with dimensions suited to the requirements to which it will be subjected. This means that the profile will not be formed with a weight beyond what is strictly necessary for what is required, nor will it be due to an extra cost due to the incorporation of material that is not necessary.

Therefore, having considered the requirements that are needed in terms of loads, the profile to be used is selected in terms of type and base material used. Subsequently, by means of a structure calculation programme, the profile size is selected in dependence of the requirements to which the profile will be subjected, and the number, size and positioning of the carbon fibre reinforcement that will need to be applied, as well as the type of epoxy that will be used for its implementation, are determined.

Therefore, a summary of the invention is described below.

The invention relates to a glass fibre reinforced plastic (GFRP) profile having a uniform section formed by means of a glass fibre reinforced thermoplastic material by means of a pultrusion process and additionally incorporating at least one carbon fibre reinforcement located in a partial specific area of the GFRP, making the final hybrid profile section non-uniform. This means that the final hybrid profile, formed by the base thermoplastic material, the glass fibre reinforcement and the carbon fibre reinforcement, is more suited to the real stress needs to which it will be subjected, resulting in a profile of lower weight and lower cost.

The hybrid profile includes reinforcements by means of incorporating carbon fibre sheets or fabrics. These reinforcements can be located in any area of the profile, no longer longitudinally, but in any part of the cross section. Furthermore, normally they will not occupy the entire length of the edge on which they are located, but only a partial area, as indicated.

The use of carbon fibre sheets or fabrics differs in the degree of flexibility needed to adapt the carbon fibre reinforcement (6) to the area of the profile (1) in question. Therefore, if it is a flat area, carbon fibre sheets can be used, while carbon fibre fabric is preferably used for applications on curved and non-flat surfaces in general.

Another important factor to take into account is the orientation of the fibre. The carbon fibre texture can have the fibres oriented unidirectionally or bidirectionally, so that the stress is focused to be absorbed in a single direction preferably or in two directions, so the arrangement of the fibre orientation is desirable to take full advantage of the properties of carbon fibre.

Furthermore, the hybrid profile can comprise a plurality of carbon fibre reinforcements that can be located in parallel along the same face of the GFRP or even in different areas of the GFRP.

Moreover, the invention also relates to the method for the construction of a hybrid profile.

This method comprises the following steps:
a) Selecting a thermoplastic material.
b) Selecting a glass fibre configuration.
c) Selecting a mould with a specific section to bond the thermoplastic material with the glass fibre by means of pultrusion and forming a GFRP.

As an alternative to these three steps, a GFRP with already known characteristics can be selected.
d) Analysing the working situation to which the GFRP will be subjected.
e) Analysing breaking loads in dependence of the stresses to which the GFRP will be subjected in the working situation defined in step d).
f) Obtaining a graph with the stress level along the GFRP.
g) Determining a workload based on the stresses obtained.
h) Determining the critical areas in which the GFRP is subjected to stresses greater than the working load.
i) Selecting a carbon fibre configuration in terms of fibre direction and thickness.
j) Adding a carbon fibre reinforcement with the configuration of step i) in the critical areas of the GFRP to form a hybrid profile.
k) Analysing the breaking loads of the hybrid profile in dependence of the working load defined in g).
k) If the entire hybrid profile is at stresses lower than the breaking load determined in step k), going to step m).
l) Going to step i).
m)Adhering the carbon fibre reinforcement selected in step i) to the GFRP by means of epoxy.

Furthermore, the size of the carbon fibre reinforcement is preferably selected in dependence of the critical areas. Therefore, the size of the carbon fibre reinforcements used is maximised, influencing not only the final weight but also the total weight of the hybrid profile eventually obtained.

### DESCRIPTION OF THE DRAWINGS

To complement the description that is being made and for the purpose of helping to better understand the features of the invention, according to a preferred practical exemplary embodiment thereof, a set of figures is attached as an integral part of said description wherein the following has been depicted with an illustrative and non-limiting character:
- Figure 1-: shows a side view and a front view of an glass fibre reinforced IPN profile.
- Figure 2-: shows a side view of the profile of Figure 1 with the bearings and loads to which it is subjected.
- Figure 3-: shows a view of the distribution of loads to which the profile in Figure 2 is subjected.
- Figure 4-: shows a partial side view and a front view of the profile of Figure 1 with a carbon fibre reinforcement implemented on the outer face of the lower flange.
- Figure 5-: shows an enlarged view of an area of the lower flange of the beam in Figure 4 showing a stress point in the profile and another in the carbon fibre reinforcement.
- Figure 6-: shows a front view of the profile of Figure 1 with several carbon fibre reinforcements implemented on the outer face of the lower flange.
- Figure 7-: shows a front view of the profile of Figure 1 with a carbon fibre reinforcement implemented in the lower flange and another in the central body.
- Figure 8-: shows a front view of the profile of Figure 1 with a carbon fibre reinforcement implemented in the lower flange and another in the upper flange.
- Figure 9-: shows a profile view of Figure 4 in a loading situation.
- Figure 10-: shows a view of the beam of Figure 6 with several carbon fibre reinforcements implemented in a superimposed position on the lower flange of the profile.

Below is a list of the different elements depicted in the figures with the reference numbers associated with them:
1. Glass fibre reinforced profile (GFRP).
2. Slide bearing.
3. Articulated bearing.
4. Loads.
5. Stress diagram.
6. Carbon fibre reinforcement.

### PREFERRED EMBODIMENT OF THE INVENTION

The present invention relates to a hybrid thermoplastic profile formed from a known profile, formed by means of a thermoplastic incorporating a glass fibre-based reinforcement (GFRP), and on which, after performing a study related to the application of breaking loads (4) and stresses to which it is subjected, the maximum working stresses have been obtained to incorporate a carbon fibre-based reinforcement (6) in the critical areas of the GFRP (1).

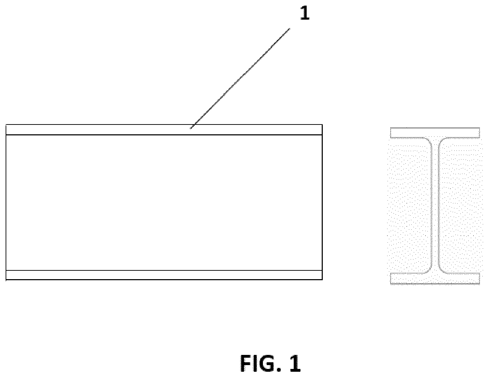

To show a preferred exemplary embodiment, a glass fibre reinforced profile (1) has been chosen, consisting of an IPN type beam having a section of 202x101x10 mm and a length of 6 m with bearings (2, 3) at points located 0.20 m from the ends of the profile (1) as depicted in Figure 1. One of the bearings (2, 3) is an articulated bearing (3), where the GFRP (1) has restricted displacement in the three directions in space and free rotation capacity. The other bearing (2, 3) is free, a sliding bearing (2), where the profile (1) has free displacement in the direction of the longitudinal axis and rotation capacity, the displacement being restricted in the other two perpendicular directions.

For the study of the test, the hypothesis of the application of the breaking loads at a distance of one third of the length of the GFRP (1) with respect to its ends has been assumed, so that they are evenly distributed along its length.

Initially, a modelling of this IPN type GFRP (1) having dimensions of 202x101x10 mm has been considered in the calculation programme, which will allow the pure bending stress to be obtained in a generalised manner in the GFRP (1). In this model, the breaking loads have been applied as point loads.

The material chosen as GFRP (1) has the following characteristics:
- Deformation modulus: 25,000 MPa.
- Density: 19 KN/m3.
- Pure bending failure: 250 MPa.

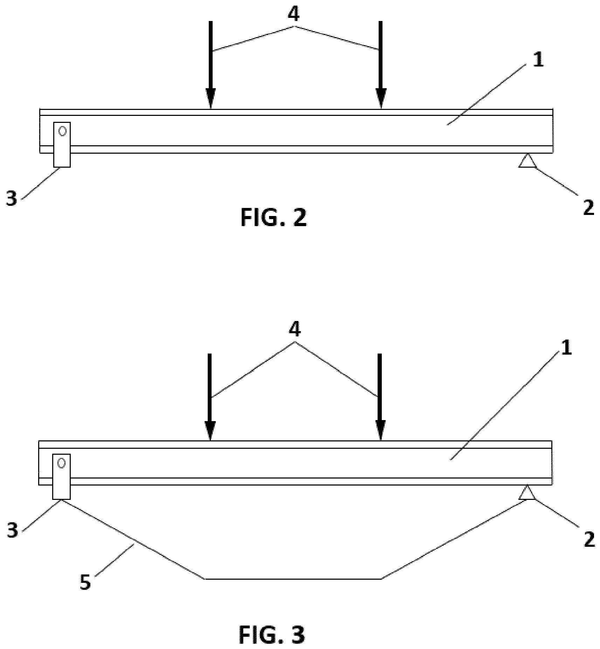

The actions considered are the following, as depicted in Figure 2:
- Self-weight of the GFRP (1) having a section of 202x101x10 mm.
- Pure bending failure. This load has been introduced in the dead load hypothesis.

To obtain the stresses in the calculation programme, the self-weight hypothesis of the GFRP (1) and dead load have been considered.

To calculate stresses, loads have not been increased.

The following results have been obtained in the test:
For the GFRP (1), a breaking load value of 33.5 KN has been obtained, for which a generalised stress has been reached in the lower fibre of the GFRP (1) of 249.6 MPa (a value close to the breaking stress of 250 MPa). The load application model is shown in Figure 2, while Figure 3 depicts the stress diagram (5) in the lower fibre of the profile (1) for this situation, with a stress value of 249.6 MPa.

As can be seen in the calculation model shown in Figure 2, a stress value close to the pure bending failure (250 MPa) has been obtained for the application of two point loads (4) of a value of 33.5 KN in the GFRP (1) having a length of 6 m.

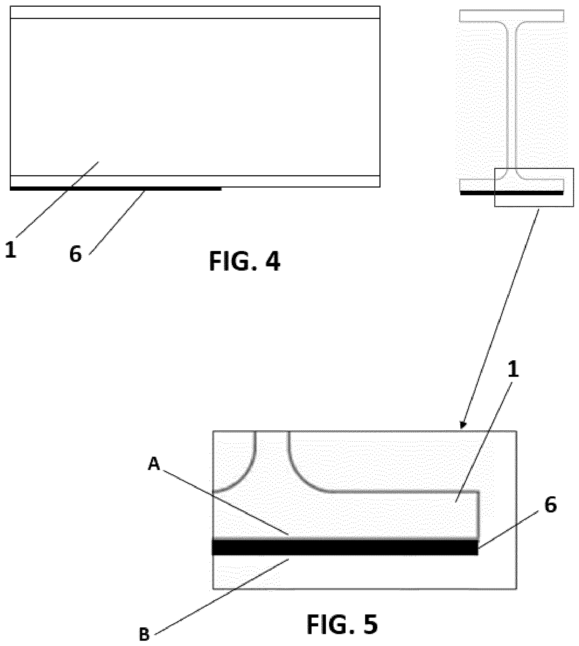

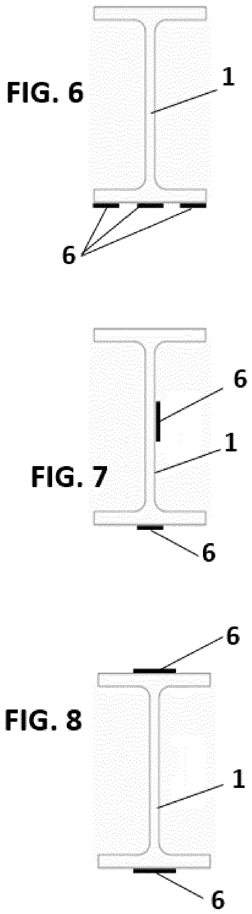

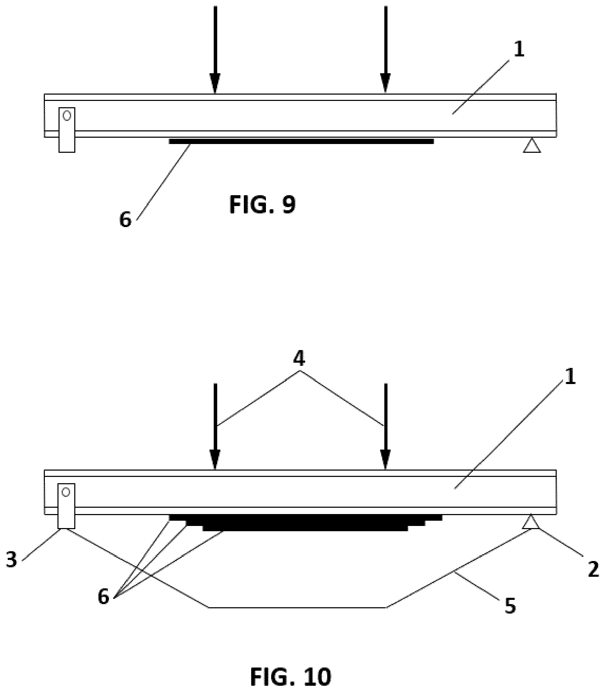

Figures 4 to 10 show an IPN type GFRP (1) incorporating carbon fibre reinforcements (6) in different positions. Therefore, it can be seen that the carbon fibre reinforcements (6) can be configured as individual strips that are located independently, as in Figures 4, 5 and 9, or in different positions simultaneously, as in Figures 6, 7, 8 and 10.

The same study performed for this case is shown below.

On this occasion, the GFRP profile (1) is the same as considered above, with the same dimensions, loads and characteristics. However, in addition, a carbon fibre reinforcement (6) with the following characteristics obtained from the technical data sheets provided by the supplier has been added:
- Deformation modulus: 210,000 MPa.
- Density: 16 KN/m3.
- Tensile breaking stress: 2,525 MPa.
- Section of the reinforcement area: 140 mm2.

For the GFRP (1) with carbon fibre reinforcement (6), a breaking load value of 59 KN has been obtained. For this purpose, the values of the tensions at a first point (A), a lower point of the flange of the GFRP (1), and at a second point (B), a lower point of the carbon fibre reinforcement (6) already fixed to the GFRP (1), the highest stress points, as shown in Figure 5, have been studied, and they comply with the pure bending stress limits in the GFRP (1) and the tensile stress limits in the carbon fibre reinforcement (6).
- Glass fibre reinforced plastic (GFRP).

The first stress point (A) is located on the outer face of the lower flange of the profile (1), allowing the pure bending stress of the GFRP material (1) of a value of 249.2 N/mm2 to be obtained.

This pure bending stress value of 249.2 N/mm2 is lower and close to the maximum breaking stress of 250 N/mm2 of the GFRP material (1); therefore, the profile utilization value is 99.6%.
- Carbon fibre reinforcement.

The second stress point (B) is located on the lower face of the carbon fibre reinforcement (6), which allows the tensile stress of the carbon fibre of 2,131 N/mm2 to be obtained.

This pure bending stress value of 2,131 N/mm2 is lower than and close to the maximum tensile stress of 2,525 N/mm2 of carbon fibre, so the profile utilization value is 84%.

The maximum deformation in the serviceability limit state in the dead load and self-weight hypothesis is 443.7 mm, which is a very high value.

The following maximum deformations have been obtained in the profiles:
- Maximum deformation of the GFRP (1): 105 mm.
- Maximum deformation of the GFRP (1) with carbon fibre reinforcement (6): 76.2 mm

It can be seen that the carbon fibre reinforcement (6) used has minimal dimensions compared to the dimensions of the profile on which it is located. In other words, for a profile having dimensions of 202x101x10 mm, a 140 mm2 reinforcement is used.

This is one of the most important features of the invention, since, with a carbon fibre reinforcement (6) of very small dimensions, very high improvements are obtained, mainly due to two factors:
- The effectiveness is directly related to the inertia of the preformed profile (1) used as a bearing.
- Carbon fibre increases its strength exponentially with deformation. Based on a GFRP (1) with such a low elastic modulus, the carbon fibre reinforcement (6) works from the first moment, ceasing to perform as an added reinforcement and becoming more similar to the performance it would have if it were an intrinsic part of the GFRP (1).

After analysing the results obtained, the following conclusions can be observed:
- The introduction of the carbon fibre reinforcement (6) improves the deformation performance of the GFRP (1) by around 25-28% compared to the deformations obtained from the GFRP (1) without the introduction of the carbon fibre reinforcement (6).

For the 202x101x10 mm profile (1) with carbon fibre reinforcement (6), it can be seen that in the calculation models shown, stress values close to the pure bending failure of 249.2 MPa have been obtained for the GFRP material (1) and a stress having a value of 2,131 MPa for the carbon fibre reinforcement (6) for the application of two point loads (4) having a value 59 KN in the 6 m long profile. The maximum deformation obtained in the profile is 443.7 mm.

Therefore, a series of conclusions can be drawn from the analysis of the results obtained.

For the 202x1 01x10 mm profile (1) without a carbon fibre reinforcement (6), it can be seen that in the calculation models, stress values close to the pure bending failure of 249.3 MPa have been obtained for the GFRP material (1) for the application of two point loads (4) having a value 33.5 KN in the 6 m long profile. The deformation obtained in the profile for a load of 10 KN is 105 mm.

For the 202x101x10 mm profile (1) with carbon fibre reinforcement (6), it can be seen that in the calculation models, stress values close to the pure bending failure of 249.2 MPa have been obtained for the GFRP material (1) and a stress having a value of 2,131 MPa for the carbon fibre reinforcement (6) for the application of two point loads (6) having a value 59 KN in the 6 m long profile, obtaining that the pure bending compression stress of the reinforced GFRP material increases to 403.2 MPa, which represents a significant increase. The maximum deformation obtained in the profile is 443.7 mm. The deformation obtained in the profile for a 10 KN load is 76.2 mm.

In terms of the performance at maximum breaking stress, an increase in its value of 62% is obtained.

In terms of the increase in the maximum breaking stress, values are increased by 76%.

In terms of deformation performance, it is observed that the introduction of carbon fibre reinforcement (6) improves deformations by around 27%.

The proposed model allows the use of plastic profiles (1) in many of the situations in which it is currently not valid, and complete and complex structures can be made from this material.

All this enables the massive use of plastic structures in all high corrosion, high electrical load areas, even in antenna structures or installations where permeability to electromagnetic waves is necessary.

## Claims

1. A glass fibre reinforced profile (GFRP) (1) having a uniform section, formed by means of a thermoplastic material bonded with glass fibre by means of a pultrusion method and incorporating at least one carbon fibre reinforcement (6) to form a hybrid profile, **characterised in that** the at least one carbon fibre reinforcement (6) is located in a specific partial area of the GFRP (1), such that the section of the formed hybrid profile is non-uniform.

2. The hybrid profile according to claim 1, wherein the carbon fibre reinforcement (6) is to be selected from a sheet and a fabric.

3. The hybrid profile according to claim 2, comprising a plurality of carbon fibre reinforcements (6) located in different areas of at least one face of the GFRP (1).

4. A method of manufacturing a GFRP (1) with at least one carbon fibre reinforcement (6) comprising the following steps:
a) selecting a thermoplastic material,
b) selecting a glass fibre configuration,
c) selecting a mould with a specific section to bond the thermoplastic material with the glass fibre by means of pultrusion and forming a GFRP (1),
**characterised in that** it comprises the following additional phases:
d) analysing the working situation to which the GFRP (1) will be subjected,
e) analysing breaking loads in dependence of the stresses to which the GFRP (1) will be subjected in the working situation defined in step d),
f) obtaining a graph with the stress level along the GFRP (1),
g) determining a workload based on the stresses obtained,
h) determining the critical areas in which the GFRP (1) is subjected to stresses greater than the working load,
i) selecting a carbon fibre configuration in terms of fibre direction and thickness,
j) adding a carbon fibre reinforcement (6) with the configuration of step i) in the critical areas of the GFRP (1) to form a hybrid profile,
k) analysing the breaking loads of the hybrid profile in dependence of the working load defined in g),
k) if the entire hybrid profile is at stresses lower than the breaking load determined in step k), going to step m),
l) going to step i),
m)adhering the carbon fibre reinforcement (6) selected in step i) to the GFRP (1) by means of epoxy.

5. The method according to claim 4, wherein steps a)-c) are replaced with the selection of a known GFRP (1).

6. The method according to claim 4, wherein the thickness of the carbon fibre reinforcement (6) is selected in dependence of the critical areas.
